# EUROPEAN PATENT APPLICATION

(11) **EP 4 564 252 A1**
(43) Date of publication of application: **04.06.2025**
(21) Application number: 23307084.6
(22) Date of filing: 29.11.2023
(51) Int. Cl.: G06Q 10/0633, G06Q 10/20

(54) **AIRCRAFT TURNAROUND MONITORING SYSTEM**

(71) Applicant: Airbus SAS, 31700 Blagnac Cedex (FR); Airbus Singapore Private Limited, Singapore 797553 (SG)
(72) Inventor: SHIN, Yenny, Singapore 797553 (SG); TAN, Da Jun, Singapore 797553 (SG); LARASATI, Larasati, Singapore 797553 (SG); LE DONGE, Romain, Singapore 797553 (SG); YON, Germain, 31700 Blagnac (FR)
(74) Representative: Abel & Imray LLP

(57) **Abstract**

A monitoring system 200 comprising multiple portable camera units may be formed by aircraft safety cones 202 each housing a video camera for locally viewing under-wing turnaround activities of an aircraft 100 at the stand. Each unit 202 has a processor 214 for relaying or processing data, images and the like captured by the unit 202. Data is sent wirelessly to a separate computer 204 and/or to other systems or personnel at the airport.

## Description

### BACKGROUND OF THE INVENTION

The present disclosure relates to monitoring of aircraft turnaround times.

More particularly, but not exclusively, this disclosure concerns an aircraft turnaround monitoring system and a method of monitoring turnaround activities in respect of an aircraft.

It is desirable to minimize the time taken to perform turnaround activities in relation to an aircraft so as to increase efficient operation of the aircraft and minimise the time between landing at an airport and next being able to take-off again. Predicting turnaround times dynamically and monitoring of aircraft turnaround activities may be useful in improving the efficient operation of an airport. Turnaround activities require multiple tasks to be performed at the airport, and at the stand at which the aircraft is positioned, and under the control of different parties such as airline operators and/or ground handlers. Airline operator staff and ground staff may manually record the start and end times for certain scheduled turnaround activities but such systems can be unreliable, being affected by human error or poor discipline and/or inadequate management or training of such ground staff. Even if such start and end times are recorded by ground staff, the handling of such data is typically inefficient, lacks integration and is poorly utilised.

Attempts have been made to automate and/or improve monitoring of and/or efficiency of scheduled aircraft turnaround activities. Some examples are now acknowledged. Management of aircraft in-cabin activities occurring during turnaround using video analytics is described in US 10,296,860. Monitoring of scheduled turnaround activities and alerting on time deviation of scheduled turnaround activities is described in US 10,089,891. A system and method for airside activity management using video analytics is disclosed in US 9,950,812. None of the prior art solutions known to the inventors gather sufficient information to enable decent efficiencies or to provide a rich and timely data set from which to provide real-time data analysis.

The present invention seeks to mitigate one or more of the above-mentioned problems. Alternatively or additionally, the present invention seeks to provide an improved aircraft turnaround monitoring system and/or an improved method of monitoring turnaround activities in respect of an aircraft.

### SUMMARY OF THE INVENTION

According to a first aspect of the invention, there is provided an aircraft turnaround monitoring system comprising two or more, and preferably at least three, portable ground-based camera units for capturing video footage of under-the-wing turnaround activities in respect of an aircraft such that data from the portable camera units can then be used by a separate computer system, for example one which oversees other aspects of turnaround activities and possibly turnaround activities of other aircraft. In embodiments, the provision of local portable on-the-ground camera units, that are integrated as part of a computerised aircraft turnaround monitoring system, to capture video footage of locally occurring under-the-wing turnaround activities enables better quality information to be gathered of the turnaround activities, and automated and enhanced monitoring of aircraft turnaround activities.

Each camera unit preferably comprises a video camera arranged to be held in an elevated position above the ground.

Each camera unit preferably comprises a wireless communication device for transmitting video and/or other information captured by the camera unit, for example from the camera unit to the separate computer system, which may be located remotely from each of the camera units.

Each camera unit preferably comprises a computer processor and associated computer software. For example, each camera unit may comprise a computing device comprising a processor and memory storing computer software for execution by the processor. The camera unit is preferably configured to capture and process, with the use of the computer software / the computing device, video footage of under-the-wing turnaround activities in respect of the aircraft being monitored. It will be understood that the aircraft being monitored will typically be stationary on the ground, for example at an airport stand.

Each camera unit may comprise an integrated source of electrical power, for example for powering the video camera, the wireless communication device and the computer processor; and/or a power interface for connecting to a removable source of electrical power.

The data transmitted from each camera unit may include time-stamp information regarding when a certain task has been determined by the computer processor to have started and / or time-stamp information regarding when a certain task has been determined by the computer processor to have been completed and/or the duration of a certain task as ascertained by the computer processor. Such time-stamp information may be determined, optionally with the use of other data received or ascertained by the camera unit (i.e. in real time) that is not based on an image of the object to which the timestamp relates. For example, position data, IoT data or information inferred from other image recognition data may be used to assist with the determining of time-stamp information by the local processor of the camera unit.

The computing device (comprising the processor) may be programmed with image recognition software that enables the computer processor to detect (e.g. relative to the field of view of the camera and/or in a particular location viewed by the camera) the arrival and / or departure time of objects and/or equipment. For example, the computing device may be configured to recognise the presence of (and/or absence of) one or more items of ground servicing equipment. The computing device may be programmed to distinguish between three or more different types of ground servicing equipment.

In embodiments, the data transmitted from each camera unit may include time-stamp information regarding the start and/or end and/or duration of a certain task (e.g. a scheduled turnaround activity) as determined by the computer processor using image recognition processes, for example to detect the arrival and/or presence and/or departure of ground servicing equipment.

The data transmitted from each camera unit may include video footage or images extracted therefrom in addition to, or instead of, such time-stamp information.

Each camera unit may comprise a cooling fan. Such a cooling fan may be configured for cooling the computer processor of the camera unit. Such a cooling fan may be configured for cooling the video camera. Such a cooling fan may be configured for cooling a wireless communication device and/or a source of electrical power. The cooling fan may be powered by a locally provided source of electrical power (i.e. of the camera unit).

Each camera unit may comprise a base configured to support the camera unit on the ground, for example, the ground surface of an aircraft parking area. There may be structure extending upwardly from the base, the structure being configured to support the video camera in its elevated position above the ground. It may be that each camera unit has a centre of gravity that is located in the bottom third (e.g. by height) of the camera unit, for example thus providing protection against the camera unit being blown over. The footprint of the base of the camera unit may have an area of at least 0.05m². Each camera unit may have an integrated hand grip - for example to facilitate manual handling. The camera units are portable and are readily moved into and out of position, by a single person. The weight of a single camera unit is preferably less than 20kg, for example 10kg or less. In embodiments of the invention the camera units may thus be manually moved into close proximity of the aircraft when parked on the aircraft stand, so that the cameras are close to, and have good visibility of, the parts of the aircraft that are below wing and the locally provided ground equipment used to service the aircraft. In such embodiments, the portable nature of the camera units, their height and their capability of being handled and moved manually by ground staff, can therefore offer advantages over the use of cameras that are instead only mounted on walls, on or in airport buildings, or are otherwise secured to elevated static structure.

It may be that each camera unit is cone-shaped. For example each camera unit may be, or may form a part of, an aircraft safety cone.

The video camera may be arranged to capture images at a location the centre of which is, or is capable of being, located within the top 20% (e.g. the top 15%, or optionally the top 10%) of the height of the camera unit when installed on the ground. The video camera may be arranged to capture images at a location the centre of which is, or is capable of being, located between 40cm and 200cm (e.g. between 50cm and 100cm) above the ground. Such a height, being above ground, but typically below wing, allows good visibility of below-wing turnaround activities.

It may be that the video camera is capable of capturing an image within any 10 degree sector around the perimeter of the camera unit, and/or may be capable of 360 degree vision. It may be that the video camera is configured to capture all 360 degrees at once or may be rotatable to capture any desired sector. A single camera of each camera unit may have a field of vision that is less than 200 degrees (e.g. 180 degrees or less). There may be more than one camera per camera unit. Each camera may be provided with one or more motors (which may be in the form of one or more electric motors, actuators or the like for example) arranged to change the field of vision of the camera, for example by moving the camera so that its axis of viewing is moved relative to the camera unit.

Each camera unit may be configured to be stacked on top of another camera unit (for example, with one part of the camera unit being accommodated inside a corresponding part of the other camera unit with which it is stacked - e.g. as a nesting arrangement).

It may be that each camera unit has a base from which a cone-shaped portion extends. Such a base and cone-shaped portion may be shaped such that when the camera unit is stacked with another like camera unit, the outer surface of the cone-shaped portion is spaced apart from the inner surface of the cone-shaped portion. This may be achieved for example with spacers on base portion.

It may be that each camera unit has a unique identifier associated with it, for example an electronic identifier, which could for example be coded on an RFID tag or similar.

At least one of the camera units may be configured such that its computer processor is configured to receive or ascertain position data indicating the position of the camera unit. For example, the camera unit may comprise an electronic geo-location device. Additionally or alternatively, the computer processor may be configured to ascertain its position relative to an aircraft by analysing one or more images captured by the camera unit when *in situ.* Additionally or alternatively, the computer processor may be configured to receive position data from a separate device, for example one which is at the same location, for example a smart-phone operated by a member of ground-staff used to determine a position and transmit such information to the adjacent camera unit. It may be that each camera unit has a location relative to the aircraft that is pre-set (pre-programmed / set by user / or otherwise determined in advance) and is then placed in that location accordingly by a human operator.

The computer processor may be configured to monitor, by analysis of the video footage, for the start of, and / or completion of, a turnaround task in respect of an aircraft that is within a field of view of the video camera, the turnaround task being pre-selected by the processor for such monitoring on the basis of the physical location of the camera unit relative to an aircraft, for example as known to the processor on the basis of position data received at, or ascertained by, the processor. Thus, it may be the case that what each camera unit detects or monitors for is determined by its location relative to the aircraft.
Each camera unit may be configured to receive data from other sources, for example sources that are local to the aircraft. It may be that other objects that are used when performing tasks are enabled with mobile communication devices, for example being internet enabled or otherwise capable of wireless communication. Such objects may utilise IoT (Internet of Things) technology for example. Data may include the type of object (e.g. a code that indicates that the object is a catering truck), it current status or other information (for example, what activity it is performing - e.g. "arriving", "in use", "departing", "in transit" or the like and/or its location, speed or other position information). It will be appreciated that embodiments of the invention that utilise camera units, with integrated processing power, local to the aircraft, optionally with further local computer processing power, and IoT technology of other locally position objects, will be well suited to distributed processing techniques and so-called edge computing. The camera units may be considered as edge devices in certain embodiments.

The camera unit may comprise a light that is configured to indicate when the camera is recording images. Such a light may additionally indicate when the camera unit is powered "on" (but not recording for example). The light may be arranged to flash on and off to indicate that it is recording, for example. Given that the camera unit is portable and may often be very near to ground staff, there may be a desire to have awareness of when a camera is recording images, in order that operators do not record anything unintentionally.

The aircraft turnaround monitoring system may further comprise the computer system to which the data concerning the under-the-wing turnaround activities are transmitted from each camera unit. It will be understood that data from the camera units may travel via other nodes, computers before being received at the computer system. The computer system may comprise a computer housed in the aircraft on the ground. The computer system may comprise a computer housed locally to the aircraft (e.g. at the same airport) but remotely from the aircraft on the ground. The data transfer times between the camera unit and a locally provided computer (e.g. one on the same local computer / comms network) allow for live processing of video data using processing power that is significantly more powerful that the computer processor provided as part of the camera unit. Some image processing may be carried out by the computer processor provided as part of the camera unit, for example recognising an object in an image. Some image and/or data processing may be carried out by a computer processor provided separately from the camera unit, for example using data from other sources. Such image processing (whether by the computer processor provided as part of the camera unit or by other computer processor(s)) may include cleaning/enhancing or otherwise pre-processing the images captured by the cameras, for example in advance of object recognition. Such image pre-processing may for example include removing noise or other unnecessary parts of the image(s) captured. For example, water-droplets visible in the image (for example, as may be present on the camera lens, or transparent covering - e.g. a viewing window - between the lens and the exterior of the camera unit, owing to inclement weather - e.g. rain, mist, sleet, snow or the like) may be detected and removed from the image by such image processing. It may be that the processing power required to perform such image- cleaning/enhancing processing in real-time is higher than provided in at least one of the camera units provided, such that such processing needs to be carried out by a computer processor remote from that camera unit. Image cleaning/enhancing may be carried out after object-detection in the image, for example so that the images are more readily viewed by a human operator.

It may be that the computer system comprises one or more remotely-located computers in a facility which serves other computer processing needs (e.g. other airports or other entities or the like). The facility may for example be a data centre. It may be that the computer system may be considered to be, at least partly, "in the cloud").

The computer system may additionally receive data relating to other activities in respect of the aircraft, for example in respect of over-the-wing activities. The computer system may receive data acquired from other apparatus in the airport, such data concerning the same aircraft. It may be that the computer system receives data in relation to the activities of other aircraft at the same airport. The computer system may receive data acquired from sensors or other devices on or in the aircraft (e.g. in cockpit and/or in the passenger cabin). The computer system, and/or the camera units, may receive data acquired from sensors or other devices on or in ground servicing equipment or other objects or equipment to be loaded onto or removed from the aircraft.

According to a second aspect of the invention, there is provided a method of monitoring aircraft turnaround activities, including in particular under-the-wing activities, for example at an airport. For example such a method may include using an aircraft turnaround monitoring system of the first aspect as described or claimed herein. There may be a step of using multiple (e.g. at least three) portable camera units to capture video footage of under-the-wing turnaround activities at a stationary aircraft. Each camera may be positioned at a height above ground of less than 2.5m (e.g. the camera unit is shorter than this height) and preferably at a height of at least 0.4m above ground (e.g. the camera unit is at least this height). Each camera unit is also positioned in the vicinity of an aircraft, preferably on the ground (e.g. directly on the ground) of an aircraft parking area. For example, each camera unit may be positioned not more than 5m from the footprint of the aircraft. Each camera unit may be positioned at, or within, (or optionally no more than 3m, for example no more than 1m, beyond) the boundary of the deemed equipment restriction area - e.g. typically marked on the ground by means of a stand safety line - around the aircraft. It will be understood that the aircraft parking area is an area that extends to cover the ground space in which a single aircraft and its associated ground equipment occupies when on the stand (and preferably no other adjacent aircraft, airport buildings, or other permanent above-the ground structure), and may therefore extend beyond the equipment restriction area.

It may be that each camera unit is located to capture at least one different activity (from the other camera units), that is an activity forming a different part of the turnaround operations. For example, one activity may be the arrival of a cargo truck at a set position relative to the aircraft, with the different activity being the arrival of a catering truck at a (for example different) set position relative to the aircraft. The activity may be different in the sense only of location and/or timing. For example, one activity may be the arrival of a cargo truck at a set position relative to the aircraft, with the different activity being the arrival of a cargo truck at a different set position relative to the aircraft. It may be that at least one of the camera units is configured to capture multiple (two or more) different activities.

The under-the-wing turnaround activities being viewed by the camera units may include monitoring the activity of ground service equipment.

The under-the-wing turnaround activities being viewed by the camera units may include deployment / removal (retraction) of stairs (e.g. air stairs), an access ramp, an airbridge (passenger boarding bridge), or other device to facilitate the movement of people (e.g. crew and / or passengers) to and/or from the aircraft.

The under-the-wing turnaround activities may include loading of catering equipment and/or catering supplies.

The under-the-wing turnaround activities may include removal of catering equipment and/or catering supplies.

The under-the-wing turnaround activities may include loading and/or removal of cargo (containerised and/or bulk cargo) and/or passenger luggage (i.e. baggage).

The under-the-wing turnaround activities may include removal of waste (e.g. including removal of waste water) from the aircraft.

The under-the-wing turnaround activities may include supplying of electrical power to the aircraft from an external source.

The under-the-wing turnaround activities may include the arrival of, and/or use of, and/or departure of cleaning equipment for cleaning the interior of the aircraft.

The under-the-wing turnaround activities may include the arrival of, and/or use of, and/or departure of air handling equipment for conditioning of air in the aircraft.

The under-the-wing turnaround activities may include refuelling of the aircraft.

The under-the-wing turnaround activities may include towing and/or pushback of the aircraft.

The under-the-wing turnaround activities may include chocking of landing gear wheels.

The under-the-wing turnaround activities may include servicing of water-based systems of the aircraft (e.g. WCs and/or potable water supplies).

All turnaround activities monitored by a single performance of the method may be completed within 2 hours or less. The local power source may therefore be able to be recharged after only a few hours.

There may be a step of using one or more of the portable camera units to capture video footage and/or still images of a part of the aircraft, for example to identify the aircraft or a part of it and/or to record other information that may for example be used for purposes other than turnaround monitoring (e.g. for maintenance / servicing purposes). For example, a camera may be used to record an image of one or more of the aircraft tyres. In embodiments, such information can then be used / analysed by a fleet/maintenance team, separate from ground turnaround team.

The method preferably includes using a computer processor, which forms a part of each camera unit, to transmit data for example to a separate computer system, via a wireless communication device also forming a part of each camera unit, the data concerning the under-the-wing turnaround activity viewed by the camera. The method may include a step, with the use of such data (whether at the processor of the camera unit or at another computer) of recording the time a turnaround activity starts and/or recording the time that a turnaround activity is completed and/or recording the duration of a turnaround activity. In embodiments, a timestamp may for example be recorded by the processor at the camera unit at the start of an activity that is recognised by that processor, optionally with additional data and/or processing by other processors, as having started. In embodiments, a timestamp may for example be recorded by the processor at the camera unit at the end of an activity that is recognised by that processor, optionally with additional data and/or processing by other processors, as having ended. With such data it may also be possible to predict the expected completion of turnaround and/or of specific activities required to enable turnaround to be completed. It may for example be possible to coordinate other airport activities with the use of such data / predictions.

The method may include monitoring aspects of over-wing turnaround activities. The method may include monitoring deplaning of (and/or boarding of) passengers via a door of the aircraft (e.g. one of two or more doors), for example including headcounting.

The method may include the computer processor of each camera unit using image recognition to determine when a turnaround activity is started and when the same turnaround activity is completed. The method may include the computer processor of each camera unit issuing an alert in the event that ground equipment is used (or not used) in a manner deemed to be out of scope of acceptable turnaround activities (e.g. not timely, not safe, too close to the aircraft, or the like). The system used to perform the method may thus have an alert generation module associated with it. Such an alert generation module may at least in part be provided as part of the camera unit, and/or may at least in part be provided as part of a separate computer.

It may be that the computing device of each camera unit is programmed to detect the arrival of ground equipment (e.g. a specific ground equipment vehicle) at the aircraft within a pre-set time (e.g. a certain time after the deemed start of turnaround activities commencing). It may be that the computing device of each camera unit is programmed to issue an alert in the event that the computing device does not detect the presence of the expected ground equipment within the pre-set time. For example, a camera unit may issue an alert indicating that the expected catering truck did not arrive when expected.

It may be that the computing device of each camera unit is programmed to detect the separation of (i.e. distance between) mobile ground equipment relative to the aircraft and to issue an alert in the event that the processor detects that a part of mobile ground equipment is deemed too close to another object (e.g. the aircraft, other ground equipment, personnel or the like). For example, a camera unit may issue an alert indicating that a cargo handling vehicle strayed too close to a part of the aircraft.

The method may be performed such that at least six different under-the-wing turnaround activities are monitored by the at least three portable camera units.

The method may include placing a camera unit in a location that is forward of the nose tip of the aircraft, and optionally aligned with the (longitudinal) line of the fuselage (as viewed from above). The method may include placing a camera unit in a location that is rearward of the tail of the aircraft, and optionally aligned with the (longitudinal) line of the fuselage (as viewed from above). The method may include placing a camera unit in a location that is on the port-side of the aircraft, optionally at or adjacent to a wingtip. The method may include placing a camera unit in a location that is on the starboard-side of the aircraft, optionally at or adjacent to a wingtip. The method may include placing a camera unit in a location that is located to one side or the other (port-side or starboard-side) of the fuselage of the aircraft, and optionally at or adjacent to an aircraft door (whether a passenger door or an aircraft door).

It may be that all of the following turnaround activities are monitored, at least in part, by the at least three portable camera units:
- deplaning of passengers from the aircraft and/or deployment / removal of stairs, access ramp, airbridge, or other apparatus facilitating the movement of passengers from the aircraft,
- removal of catering equipment and/or catering supplies, and
- removal of cargo and/or passenger luggage.

It may be that all of the following turnaround activities are monitored, at least in part, by the at least three portable camera units:
- deemed completion of cleaning of the interior of the aircraft (e.g. arrival of and then departure of cleaning equipment),
- deemed completion of servicing of water-based systems of the aircraft (e.g. arrival of and then departure of associated equipment - both waste water and potable water servicing), and
- refuelling of the aircraft.

It may be that all of the following turnaround activities are monitored, at least in part, by the at least three portable camera units:
- boarding of passengers on the aircraft and/or deployment / removal of stairs, access ramp, airbridge, or other apparatus facilitating the movement of passengers to the aircraft,
- loading of catering equipment and/or catering supplies,
- loading of cargo and/or passenger luggage.

The method may include providing video output and/or images, annotated automatically with information gathered by the camera units, or associated computing equipment. Such information may include time-stamp information regarding objects in the image. Such information may include identification of objects recognised in the image. Such information may include identification of objects deemed not to be present in the image and/or objects expected to be present in the image in the future and/or objects which have left the physical area visible in the image (i.e. previously deemed present in an earlier image of the same location). Such information may include alert information regarding turnaround tasks such as delays in tasks starting or finishing, the late arrival (or non-arrival) of certain objects that may or may not be shown in the image / video.

The method may include outputting collated information on a visual display for viewing by a human operator. The information outputted by the method may be summarised and / or displayed at a remote location - for example at a control centre - for example in the form of a report visible on a dashboard display - optionally after being combined with other data / information, for example data from the aircraft, from the airline operating the aircraft and/or the airport. Such a report may include images captured by the one or more camera units, which may be displayed in real-time (i.e. with negligible delay) and/or may be presented as video. The images may be annotated with information regarding one or more of (a) the objects recognised as present in the image (i.e. their type, identification number or the like), (b) time information regarding such present objects (i.e. arrival time, duration present, timeliness information or the like), (c) objects absent from the image, (d) time information regarding such absent objects, (e) status information regarding the timing of one or more specific turnaround activities and (f) status information regarding the timing of the turnaround of the aircraft (e.g. information on whether the expected completion is on time, early or late, and optionally by how much time).

The aircraft that is the subject of the turnaround operations may be a passenger aircraft. The passenger aircraft preferably comprises a passenger cabin comprising a plurality of rows and columns of seat units for accommodating a multiplicity of passengers. The aircraft may have a capacity of at least 20, and more preferably more than 50 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more.

The method may include a step of a central computer system monitoring ground operations of the aircraft. The method may include the step of transmitting, via the wireless communication device, data concerning the under-the-wing turnaround activity viewed by the camera resulting in data concerning the under-the-wing turnaround activity being received by such a central computer system. Data concerning a related turnaround activity as collected by a sensor, camera or other device, independent of the camera units used to monitor the under-the-wing turnaround activities, may be additionally received by the central computer and processed with the use of the data concerning the under-the-wing turnaround activity to provide information regarding the turnaround of the aircraft. The related turnaround activity may be related in the sense that it has a dependency of some sort. For example, the under-the-wing turnaround activity viewed by the camera may be the arrival of a jetway, ramp or the like and the related turnaround activity may be the deplaning of passengers as detected by cameras in the cabin of the aircraft. The sensor, camera or other device, independent of the camera units could be on or in the aircraft. The sensor, camera or other device, independent of the camera units could be provided at the airport, for example having a fixed position in the airport. The sensor, camera or other device, independent of the camera units could be on or in ground servicing equipment and/or provided on personnel. It will be understood that the central computer system is "central" in the sense that it may communicate with multiple other systems or devices but does not necessarily need to be physically located in a central position.

There may be other systems used in parallel with - and preferably in conjunction with - the cameras recording footage of such under-the-wing turnaround activities. Such other systems may use in-cabin sensors and/or cameras to measure passenger movement within, into and out of the aircraft for example and/or the cleaning of the aircraft.

The method may include a step of determining the start of turnaround activities. This may be detected once all camera units are powered up and have confirmed that each is in an active state by transmitting a suitable electronic message.

According to a third aspect of the invention, there is provided a portable camera unit, for example for use in relation to the first and/or second aspects of the invention as described or claimed herein. The portable camera unit comprises at least one video camera, preferably arranged to be held in an elevated position above the ground. The portable camera unit preferably comprises a wireless communication device for transmitting video and/or other information captured by the camera. The portable camera unit preferably comprises a computing device (e.g. a computer processor and associated computer software). The portable camera unit preferably comprises an integrated source of electrical power and/or a power interface for connecting such an integrated source of electrical power - the power being for powering the video camera, the wireless communication device and / or the computer processor.

In an embodiment of the invention the portable camera unit is also an aircraft safety cone, or at least forms part of an aircraft safety cone, for example by being integrated therein. Such a cone preferably has a height of at least 500mm (optionally at least 700mm). Such a cone preferably has a weight of between 4kg and 15kg (ideally between 4.5kg and 10kg). Such a cone preferably has a reflective striping that contrasts with an adjacent part of the cone, for example for the purpose of enhanced visibility. Such a cone is preferably one which is stackable with other cones of the same size and shape. The video camera of the cone is preferably positioned to capture images at a height above 500mm and/or above 75% the height of the cone. The cone preferably has an integrated wireless communication device for transmitting video and/or other information captured by the camera, and an integrated computing device comprising a computer processor and associated computer software for controlling what data is transmitted via the wireless communication device. The cone preferably has a power source or an interface for connecting a power source. The safety cone may be used to perform the dual functions of a (optionally stackable) airport safety cone and at least a part of a video system, for example an aircraft turnaround monitoring system for monitoring under-the-wing turnaround activities. For example, in use there may be three or more such aircraft safety cones located on the ground next to an aircraft being viewed by the video camera of each safety cone.

There may be provided a kit of parts for converting an aircraft safety cone into one that is in accordance with the present invention.

Reference is made herein to a computer processor performing various functions. The computer processor may be provided as one or multiples chips or other parts, preferably in close proximity to each other if in multiple parts. The processor will typically execute computer software, for example provided by or on a computer program product, which comprise instructions to be performed by the computer processor. Such computer software is stored, at least temporarily, on memory (which may similarly be provided on one or more chips) readable by the computer processor. The computer processor therefore typically forms part of a computing device that may be considered as being programmed to perform certain tasks (i.e. programmed in the sense that the computing device comprises a processor and memory storing computer software for execution by the processor).

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
Figure 1 shows an aircraft at a stand during turnaround activities being monitored by a system of camera units according to a first embodiment of the invention;
Figure 2 shows a camera unit of Figure 1;
Figure 3 is a diagram showing the functional blocks of the camera unit of Figure 2;
Figure 4 shows a stack of the camera units of Figure 1;
Figure 5 is a diagram showing the timing of certain scheduled turnaround activities; and
Figure 6 is a diagram illustrating a method of use of the first embodiment of the invention.

### DETAILED DESCRIPTION

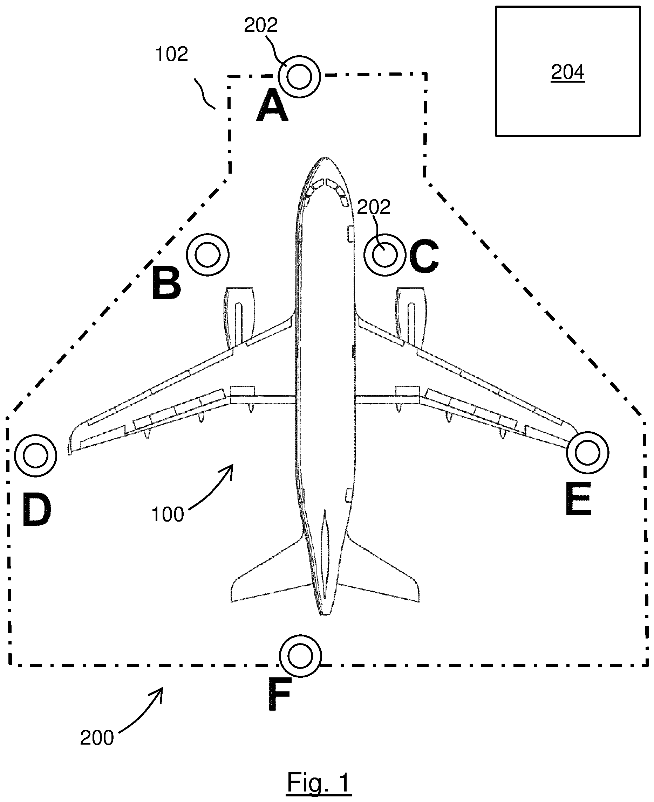

Figure 1 shows a commercial passenger aircraft (e.g. an Airbus A320) at a stand at an airport during turnaround procedures being carried out at the stand after the aircraft has landed at the airport and before it leaves the stand for its next flight. Scheduled turnaround activities for an aircraft include activities that are primarily carried out at the stand, using ground handling equipment for example, and other, typically aircraft-based activities, many of which being carried out at other locations at the airport. Such aircraft-based activities may include activities such as touchdown, start of braking, operation of brake fans, taxiing to the stand, operating the parking brake, stopping the aircraft engines, aircraft docking and undocking, starting the aircraft engines, aircraft pull away, reaching taxi speed, and the like. The turnaround activities at the stand may for example include refuelling, cargo handling, passenger movement, doors opening / closing, and performing operations relating to activities like cleaning, waste-handling, movement of supplies, and the like. The present embodiment concerns a monitoring system for monitoring turnaround activities at the stand.

As shown in Figure 1, the monitoring system 200 comprising six portable aircraft safety cones 202 each housing a video camera for viewing turnaround activities at the stand. Each cone 202 communicates wirelessly with a computer 204, which relays or processes data images and the like from the cones to other systems or personnel at the airport. The cones are placed around the aircraft in positions (labelled A to F in Figure 1) that enable the cones to perform the dual roles of safety cones and of turnaround monitoring stations. Some are at the periphery of the equipment restriction area (the stand safety line) shown in Figure 1 by the broken line 102 around the aircraft 100. The cameras are positioned so that they have a clear view of activities at the aircraft and/or in the equipment restriction area and can therefore readily view under-the-wing turnaround activities, which would not be easily viewed by other cameras which might already be provided at the airport. It will be appreciated however that such other cameras may additionally form part of the monitoring system.

In the context of the presently described embodiment, "under the wing" activities at the stand include cargo (both containerised and bulk) unloading and loading and other ramp activities such as: providing electricity (Ground Power Unit), conditioning aircraft cabin temperature (Pre-Conditioned Air Unit), chocking of landing gear wheels, refuelling, servicing potable water and toilet facilities, towing/pushback of the aircraft and providing access means to the passengers (via stairs, ramps or Passenger Boarding Bridge/PBB). Such "under the wing" activities at the stand can be contrasted with "over the wing" activities, which include aircraft passenger cabin related activities such as passenger boarding and deplaning, activities concerning catering galleys on the aircraft, aircraft cabin cleaning and preparation, and safety and security checks as needed within the aircraft. While the monitoring system to which the safety cones belong may also monitor "over the wing" activities, the primary focus and use of the safety cones 202 of the present embodiment relate to "under the wing" activities.

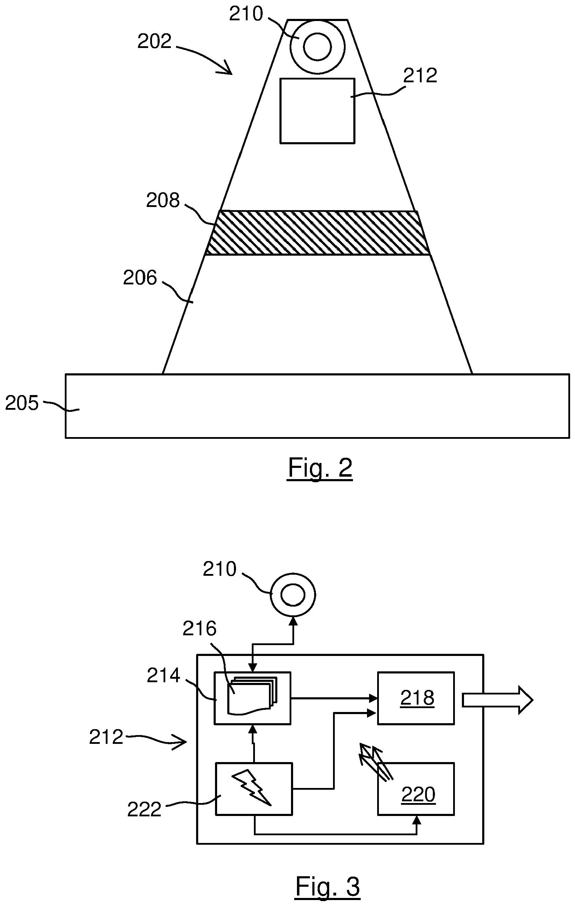

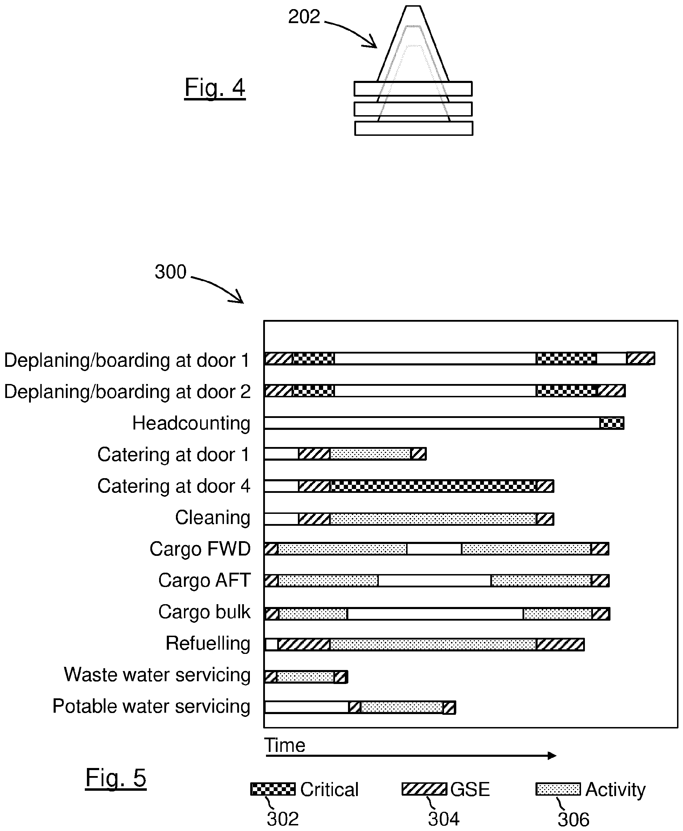

An example of one of the safety cones 202 is shown in Figure 2. The cone 202 has a heavy (square in plan view) base 205 from which a hollow conical main body 206 extends. The base portion is denser (heavier per unit volume) than the conical main body. The cone weighs about 6Kg in total. The cone is sturdy and not prone to being blown over in gusty conditions, as might be common at a typical airport. The main body 206 includes one or more reflective stripes 208 for improving visibility. The cone is about 0.75m tall and about 0.35m wide at the base with a footprint of a little over 0.1 square metres. At the top of the main body the electronic equipment is provided including the camera 210 and various other supporting electronic devices (represented by box 212). The camera has 360 degree vision and is housed in a transparent casing. The other supporting electronic devices include the parts shown in Figure 3, which shows a processor 214 (which could be in the form of a processor such as those available from the Raspberry Pi Foundation / Raspberry Pi Limited ) with appropriate software 216, a wireless communication device 218, a cooling fan 220, all of which being powered by a local power source in the form of a rechargeable battery 222. The processor has a unique identifier associated with it, so that the cones are all (electronically) distinguishable from each other. The components are all ruggedized and protected from weather and may all be contained in the upper 0.1m nose of the cone. As shown in Figure 4, the cones 202 are stackable to facilitate efficient storage when not in use at the stand.

Figure 5 is a chart 300 showing the timing of some typical turnaround activities, with each row in the chart relating to an activity and time being shown along the horizontal axis. Thus, the start of activities is marked by the arrival of the ground service equipment (ramp, PBB or the like) for deplaning the passengers, for attending to cargo handling and waste-water servicing. The critical path for achieving turnaround, insofar as the activity at the stand is concerned, is indicated by the shading shown in box 302. Thus, deplaning and boarding of passengers is on the critical path, as are catering activities and headcounting once all passengers are boarded. It will be appreciated that for different types of aircraft different turnaround activities may be on the critical path, including for example refuelling. For an Airbus A320 the turnaround time associated with the chart shown in Figure 5 might be between 40 and 50 minutes. For other aircraft the duration may be between 20 and 120 minutes depending on the size of the aircraft and other factors. Arrival, movement and/or departure of ground servicing equipment is indicated by the shading shown in box 304. Other activity in relation to a particular scheduled turnaround activity is indicated by the shading shown in box 306. The turnaround activities shown in Figure 5 include deplaning/boarding of passengers, headcounting including last passenger seating ("LPS"), various catering activities divided out according to which aircraft door they are associated with, cargo handling activities (whether forward, aft and/or bulk), refuelling, waste water / toilet servicing, and potable water servicing. Security and safety checks are also carried. Other activities might also be carried out that are not shown explicitly in Figure 5. Certain activities are only started when an earlier activity is completed. For example, cleaning (and optionally also refuelling) is carried out after deplaning (deboarding) of previous passengers and before boarding of new passengers.

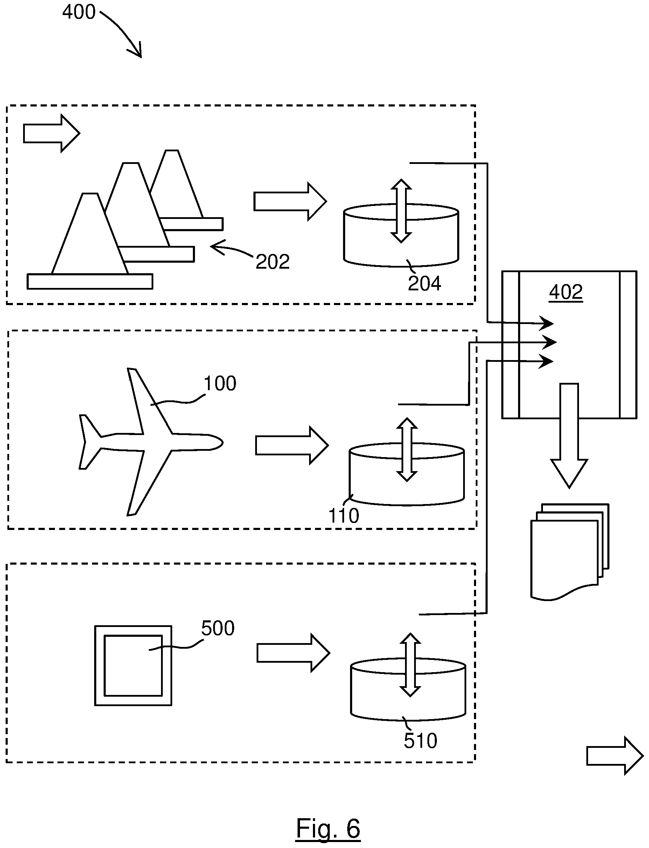

Use of the cones 202 will now be described with reference to Figure 6 which shows the various parts of an integrated turnaround monitoring solution 400, including the under-the-wing monitoring system 200 of Figure 1. The integrated turnaround monitoring solution 400 has a central computer platform 402 (part or all of which may be located "in the cloud") that receives and processes data from various sources including from the under-the-wing monitoring system 200 via its associated computer system 204, from sensors and devices associated primarily with the aircraft 100 for monitoring over-the-wing turnaround activities via its computer system 110 and also data from other sources 500, for example data from the airline, from the airport, whether relating to the aircraft 100 on the stand or more generally (e.g. statistical data regarding turnaround activities of the type being performed) via associated computer systems 510. Devices, sensors and the like associated with the ground handling equipment for the under-the-wing activities, with the over-the-wing activities and/or with other activities at the airport are wirelessly connected via IOT (Internet of Things) technology. The data received at the central computer platform 402 enables the airline and/or airport to monitor all turnaround activities in real-time and dynamically, with far less human input than previously required. The system of the present embodiment may enable optimisation of turnaround times, and may play a part in damage prevention / detection and improved safety / efficiency.

The cones are set-up to capture information such as the arrival, presence and/or departure of Ground Support Equipment (GSE) for catering, cargo, baggage, fuel, water, cleaning trucks, via image recognition. Such image recognition may be held in software on the processor in the cone. Some image processing may however be performed on a separate computer.

Initially, after the aircraft is held with chocks-on, the cones are placed in position around the aircraft, for example as shown in Figure 1. Each cone performed monitoring functions dependent on its position relative to the aircraft (such a position being determined in advance, so that each cone needs to be placed in a certain location, but could equally be ascertained automatically by the cone via geo-location tools, and/or communicating with other devices / cones in the vicinity and/or by image recognition of it local environment and part(s) of the aircraft that are within the field of vision of the camera).

In this embodiment, and with reference to Figure 1, the cone at position A monitors for ground towing equipment in front of the aircraft nose tip. The cone at position B monitors for an air conditioning unit that is expected to park in front of the aircraft's port-side engine, for the PBB (passenger boarding bridge) in front of the air conditioning unit and for a catering truck which should be within the cone's view perimeter. The cone at position C monitors for a lower deck cargo loader, which is expected to park in front of the aircraft's starboard-side engine, a refuelling tanker and a Unit Loading Device ("ULD" - a specially shaped container for loading cargo/items in the aircraft) which should be within the cone's view perimeter. The cone at position D - i.e. at the tip of aircraft port-side wing - monitors for the potable water vehicle, a cleaner truck, and cargo conveyor belts. The cone at position E - i.e. at the tip of aircraft starboard-side wing - monitors for a lower deck cargo loader, a catering truck, and conveyor belts. The cone at position F - i.e. behind the tail of the aircraft starboard-side wing - monitors for the lavatory truck. While the function of the cone may depend on its position, each cone in a given position relative to an aircraft has the capability of performing the function of any cone in a different position relative to the aircraft. Thus, each cone is capable recognising items such as ground towing equipment, air conditioning units, PBBs, catering trucks, cargo loaders/lifts, refuelling tankers, potable water vehicles, cleaner trucks, conveyor belts, and lavatory trucks. Each cone may also be programmed to recognise high lifts, "Ambulifts", other types of mobile stairs/service stairs, de-icing equipment, other common airport vehicles such as cars, vans, fire trucks, and the like. Thus, each cone is capable detecting, via image recognition tools, and distinguishing between many different types of ground servicing equipment and other vehicles / apparatus.

Once the cones are placed in position and the cone cameras are operational, the cones monitor for the arrival of ground service equipment at certain times. Thus the arrival / departure of ground towing equipment, air conditioning equipment, the PBB, the catering truck(s), the lower deck cargo loader(s), the refuelling tanker, ULD(s), the potable water vehicle, the lavatory truck, other cleaner truck(s), and cargo conveyor belts is monitored by the cameras of the cones. If any ground service equipment arrives or departs at a time different from expected (within a given margin of acceptable difference) that is detected by the cameras and an alert is generated. Such information can then be used to calculate any expected delay (or difference in timing of given turnaround activities) and appropriate action taken, in relation to other activity in the airport for example. When an item of ground service equipment is detected by a cone as having arrived in a position suitable for performing an associated scheduled turnaround task, the cone creates a starting time-stamp (i.e. start time) for that task and transmits such data to the computer system 204 which then passes such data onto the central computer platform 402. Similarly, when an item of ground service equipment is detected by a cone as having departed from the position suitable for performing its associated scheduled turnaround task, the cone creates a completion time-stamp (i.e. end time) for that task and transmits such data to the computer system 204 which then passes such data onto the central computer platform 402. The data sent to the computer system 204, and optionally also to the central computer platform 402, may include still images and/or video footage (optionally, annotated video - for example annotated with information regarding the identity of items in the image and related time-information) from the camera of the cone(s). Images / video may undergo (preferably automated) blurring / redaction in order to remove personal data or sensitive data, such as vehicle number plates, human faces, or the like. Data regarding any alerts or warnings issued by the cone are transmitted too. Other data transmitted from the cone includes its identification and/or position. Data from the aircraft, and its sensors, own cameras and the like, is sent to the central computer platform 402, optionally via an intervening computer system 110, and may include data relating to activities such as doors opening / closing, the start/end of fuelling / water-filling, movement of ULD(s). Other systems 500 may provide data such as when passengers have all deplaned (deboarded) and/or all boarded; when all cargo / baggage has been loaded / unloaded; and when cleaning / catering tasks have been started/completed. All such data may be shared amongst other parts of the overall integrated turnaround monitoring solution 400, such that for example, the cones and/or the under-the-wing monitoring system received an indication that refuelling has completed (from aircraft-originating data) and thus monitors for the prompt departure of the fuelling truck.

It will be seen that the system and method of the illustrated embodiment enables devices and equipment under-the-wing to be tracked, without needing (although preferred) such devices and equipment to be provided with any IOT and/or geolocating capabilities.

While many airports already have cameras installed for viewing activities on the stand, such cameras are mostly located at a height 'over the wing' and often at some distance away making the resolution of the important parts of any image relatively poor. There may be structural blockages, weather effects and other environmental impediments to capturing clear footage `under the wings' - an issue that the present embodiment avoids.

To summarise the function of above described present embodiment, the system is configured to identify different objects located nearby the cones (and under the wing), is configured to detect times of events and activities (arrival / departure / use) in relation to such identified objects, and is able to send warning / alert signals in the event that something goes wrong.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

Not all safety cones need to be camera units. There could be a different number of cones in total, some being camera units some not. Camera units could be provided locally to the aircraft, not being part of a safety cone. Such camera units could be wearable devices for example. Such camera units would be provided with mobile communication devices to allow integration into the local computer network.

Some image processing, of video footage captured by a cone, could be conducted by a processor separate from the cone, yet still reasonably local - for example by utilising the computer processing capabilities of the on-aircraft computers - other computing facilities in the airport.

If ground equipment were provided with more IoT technology (e.g. Bluetooth or wi-fi capabilities) there could be more communication to and from the camera units and between such IoT-enabled ground equipment GSE and the cones. That could enhance the accuracy of image recognition and/or act to confirm image recognition / reduce errors (incorrect object identification).

The cones may be programmed to not capture images if there is no change and/or to use movement detection in conjunction with image capture to reduce the amount of unnecessary video data being captured and/or transmitted.

The cones may be programmed so as to be able to detect different types of activities being performed by the same object, in the case where a single object is capable of performing different types of activities.

The embodiments and/or the present invention may be used as part of or in conjunction with other prior art turnaround monitoring technologies such as those described in US 10,296,860, US 10,089,891 and /or US 9,950,812, the contents of which being incorporated herein by reference.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. An aircraft turnaround monitoring system comprising at least three portable camera units, each camera unit comprising:
a base configured to support the camera unit on the ground surface of an aircraft parking area,
a video camera arranged to be held in an elevated position above the ground,
a wireless communication device for transmitting video and/or other information captured by the camera,
a computing device comprising a processor and memory storing computer software for execution by the processor, and
an integrated source of electrical power arranged to power the video camera, the wireless communication device and the computing device,
the camera unit being configured to capture and process, using the computing device, video footage of under-the-wing turnaround activities in respect of an aircraft which is stationary on the ground and to transmit, using the wireless communication device, data (for example, including video footage or images extracted therefrom) concerning such under-the-wing turnaround activities from the camera unit to a computer system located remotely from each of the camera units.

2. The aircraft turnaround monitoring system of claim 1, wherein the data includes time-stamp information indicating when a certain task has been determined by the computer processor to have started and / or time-stamp information indicating when a certain task has been determined by the computer processor to have been completed.

3. The aircraft turnaround monitoring system of claim 1 or claim 2, wherein each camera unit comprises a cooling fan for cooling one or more of the video camera, the wireless communication device, the computing device, and the source of electrical power, the cooling fan being powered by the source of electrical power.

4. The aircraft turnaround monitoring system of any preceding claim, wherein each camera unit comprises structure extending upwardly from the base of the camera unit, the structure supporting the video camera in its elevated position above the ground, and
wherein
each camera unit has a centre of gravity that is located in the bottom third of the camera unit.

5. The aircraft turnaround monitoring system of any preceding claim, wherein
each camera unit is, or forms part of, an aircraft safety cone,
and/or
each camera unit is configured to be stacked on top of another camera unit, such that a part of one camera unit accommodates within it a corresponding part of the other camera unit on which it is stacked.

6. The aircraft turnaround monitoring system of any preceding claim, wherein the computing device of at least one of the camera units is configured to receive or determine position data indicating the position of the camera unit and to monitor, by analysis of the video footage, for the start of, and / or completion of, a turnaround task in respect of an aircraft that is within a field of view of the video camera, the turnaround task being pre-selected by the computing device for such monitoring on the basis of the physical location of the camera unit relative to an aircraft as indicated by the position data.

7. The aircraft turnaround monitoring system of any preceding claim further comprising the computer system to which the data concerning the under-the-wing turnaround activities are sent from each camera unit using the wireless communication device, and wherein the computer system is additionally arranged to receive data relating to over-the-wing turnaround activities in respect of the aircraft.

8. A method of monitoring under-the-wing turnaround activities in respect of an aircraft, the method including the following steps:
• using at least three portable camera units at a height above ground of less than 2.5m and in the vicinity of an aircraft that is stationary on the ground to capture video footage of under-the-wing turnaround activities, each camera unit being located so that it captures a different under-the-wing turnaround activity,
• the under-the-wing turnaround activities being any in the group consisting of:
o deployment and/or removal of a device to facilitate the movement of people to and/or from the aircraft,
o loading and/or removal of catering equipment and/or supplies,
o loading and/or removal of cargo and/or passenger luggage,
o removal of waste from the aircraft,
o supplying of electrical power to the aircraft from an external source,
o arrival of, and/or use of, and/or departure of cleaning equipment for cleaning the interior of the aircraft,
o arrival of, and/or use of, and/or departure of air handling equipment for conditioning of air in the aircraft,
o fuelling of the aircraft,
o towing and/or pushback of the aircraft,
o chocking of landing gear wheels, and
o servicing of water-based systems of the aircraft,
• for each camera unit, using a computing device forming a part of the camera unit to process data concerning the under-the-wing turnaround activity viewed by the camera unit,
• for each camera unit, using the computing device to transmit data, via a wireless communication device forming a part of the camera unit,
• determining from the data the time a turnaround activity starts and the time that the turnaround activity is completed, and
• recording the time the turnaround activity starts and recording the time that the turnaround activity is completed.

9. The method of claim 8, wherein the computing device of each camera unit is configured to issue an alert in the event that ground equipment is used, or not used, in a manner deemed to be out of scope of acceptable turnaround activities.

10. The method of claim 9, wherein
the computing device of each camera unit is arranged to detect the arrival of a specific example of ground equipment at the aircraft within a pre-set time and is arranged to issue an alert in the event that the camera unit does not detect the presence of the specific example of ground equipment within the pre-set time
and/or
the computing device of each camera unit is arranged to detect the separation of mobile ground equipment relative to the aircraft and to issue an alert in the event that the camera unit detects that a part of mobile ground equipment is deemed too close to another object.

11. The method of claim 9 or 10, wherein
a central computer system monitors ground operations of the aircraft,
the transmitting, via the wireless communication device, of data concerning the under-the-wing turnaround activity viewed by the camera results in data concerning the under-the-wing turnaround activity being received by the central computer system, and
data concerning a related turnaround activity as collected by a sensor, camera or other device, independent of the camera units used to monitor the under-the-wing turnaround activities, is received by the central computer and the data concerning the under-the-wing turnaround activity and the data concerning a related turnaround activity are processed by the central computer to provide information regarding the turnaround of the aircraft.

12. A portable camera unit comprising:
a video camera arranged to be held in an elevated position above the ground,
a wireless communication device for transmitting video and/or other information captured by the camera,
a computing device comprising a processor and memory storing computer software for execution by the processor, and
an integrated source of electrical power for powering the video camera, the wireless communication device and the computer processor and/or a power interface for connecting such an integrated source of electrical power,
the camera unit being configured for use as one of the camera units of any of claims 1 to 9 and/or being configured for use in the performing of the method of any of claims 10 to 13.

13. An aircraft safety cone wherein
the cone has a height of at least 500mm and a weight of between 4kg and 15kg,
the cone has reflective striping that contrasts with an adjacent part of the cone, for the purpose of enhanced visibility,
and
the cone has an integrated video camera, an integrated wireless communication device for transmitting video and/or other information captured by the camera, and an integrated computing device comprising a processor and memory storing computer software for execution by the processor for controlling what data is transmitted via the wireless communication device,
and optionally wherein the cone is stackable with other cones of the same size and shape.

14. Three or more aircraft safety cones each being an aircraft safety cone according to claim 13, wherein each cone is located on the ground next to an aircraft being viewed by the video camera of the safety cone.

15. An aircraft safety cone according to claim 13 or 14, wherein the aircraft safety cone is a portable camera unit according to claim 12.

16. A computer program product comprising instructions which, when the program is executed by a computer, cause the computer to perform the function of the computing device of the portable camera unit of claim 12.

17. A kit of parts for use in creating an aircraft turnaround monitoring system according to any of claims 1 to 7, for use in performing the method of any of claims 8 to 11, for use in creating a portable camera unit according to claim 12, or for use in creating an aircraft safety cone according to claims 13 or 14, the kit comprising a camera, a wireless communication device for transmitting video and/or other information captured by the camera, an associated computer processor and computer program product for use in operating the camera and for use in controlling transmission of data to and from the wireless communication device.
